# EUROPEAN PATENT SPECIFICATION

(11) **EP 2 027 577 B1**
(45) Date of publication and mention of the grant of the patent: **08.05.2019**
(21) Application number: 07759662.5
(22) Date of filing: 29.03.2007
(51) Int. Cl.: G10H 1/34, G10H 1/36, A63F 13/20, A63F 13/814, A63F 13/245, A63F 13/22

(54) **GAME CONTROLLER SIMULATING A GUITAR**
SPIELSTEUEREINHEIT, DIE EINE GITARRE SIMULIERT
MANETTE DE JEU SIMULANT UN INSTRUMENT DE MUSIQUE

(30) Priority: 29.03.2006 US 743938 P; 04.12.2006 US 566615; 10.12.2006 US 609654
(43) Date of publication of application: 25.02.2009
(73) Proprietor: HARMONIX MUSIC SYSTEMS, INC., Cambridge MA 02139 (US)
(72) Inventor: LOPICCOLO, Gregory, B., Cambridge, MA 02139 (US); KAY, Robert, Cambridge, MA 02139 (US); BROSIUS, Eric, J., Cambridge, MA 02139 (US); SUSSMAN, Daniel, K., Cambridge, MA 02139 (US); EGOZY, Eran, B., Cambridge, MA 02139 (US)
(74) Representative: Barker Brettell LLP
(86) International application number: PCT/US2007/065458
(87) International publication number: WO 2007/115072

(56) References cited:
- EP-A- 1 081 680
- WO-A-86/01927
- WO-A-2004/008430
- DE-A1- 19 833 989
- US-A- 6 111 179
- US-A1- 2004 244 566

## Description

### Field Of The Invention

This invention relates to video game controllers and, more particularly, to video game controllers that emulate a musical instrument to provide game input.

### Background Of The Invention

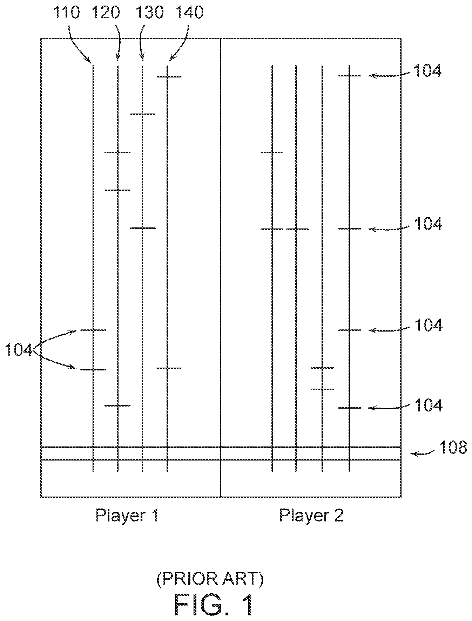

"Rhythm-action" is a popular video game genre which requires a player to perform phrases from a pre-recorded musical composition using the video game's input device. One of the best-known examples of this genre is the BEATMANIA series of games published by Konami Co. Ltd. of Japan. In this series of games the notes in musical phrases are graphically displayed to the player as a series of visual markers spaced along one or more timelines; each marker corresponds to one note in the phrase. In the block diagram environment shown in FIG. 1, visual markers 104 move from the top of the display to the bottom of the display. As each marker on the scrolling timelines 110, 120, 130, 140 passes a graphical cursor 108 displayed along this timeline, the player must simultaneously press a button on an input device (not shown) corresponding to the correct timeline to play the sound of the corresponding note at the correct time. If the player performs this action successfully for a sufficient percentage of the notes, he scores well and wins the game. If the player fails to perform this action successfully for a sufficient percentage of the notes, he scores poorly and loses the game. As shown in FIG. 1, two or more players may compete against each other, typically by each one attempting to play back different, parallel musical phrases from the same song simultaneously. The player who plays the highest percentage of notes correctly achieves the highest score and wins.

It is known, in the context of some rhythm-action games, to provide game controllers simulating musical instruments that allow players to fully use both their right and left hand to provide game input. It would be desirable to provide a game controller that closely mimics the instrument which the controller simulates in such a way that the physical instrument features mimicked by the controller affect gameplay.

Examples of musical and/or simulated musical instrument games are disclosed in EP1081680, in which song accompaniment system includes a karaoke machine and a simulated guitar machine, and the karaoke machine downloads accompanying music in the form of MIDI data from a source data storage. In US 2004/244566, an electric guitar facilitates isolating principles of making music such that an individual can learn one aspect at a time of playing the guitar and of playing music and can, to match the skill level of the player, progressively require more aspects to be mastered in order to play the guitar; while in WO 2004/008430, an interactive multimedia apparatus is disclosed comprising a digital musical instrument in the form of a simulated guitar.

### Summary of the Invention

The present invention relates to a method for facilitating interaction of a player with a music-based video game, according to Claim 1.

The present invention further relates to a game controller according to Claim 9.

### Brief Description Of The Drawings

The invention is pointed out with particularity in the appended claims. The advantages of the invention described above, as well as further advantages of the invention, may be better understood by reference to the following description taken in conjunction with the accompanying drawings, in which:
FIG. 1 is a block diagram depiction of a rhythm-action game environment;
FIG. 2 is a configuration diagram of one embodiment of a guitar controller;
FIG. 2A is a configuration diagram of another embodiment of a guitar controller;
FIG. 2B is a configuration diagram of another embodiment of a guitar controller;
FIG. 2C is a configuration diagram of yet another embodiment of a guitar controller having two sets of fret buttons disposed on the neck of the guitar;
FIG. 2D is a configuration diagram of another embodiment of a guitar controller having a whammy bar in a first position;
FIG. 2E is a side view diagram of an embodiment of a game controller simulating a guitar that includes a whammy bar;
FIG. 2F is a configuration diagram of yet another embodiment of a guitar controller having two sets of fret buttons disposed on the neck of the guitar;
FIG. 3 is a screen shot depicting a screen display of a rhythm action game;
FIG. 3A is a screen shot depicting a screen display of a rhythm action game;
FIG. 3B is a flow diagram illustrating a method for facilitating interaction of a player with a music-based video game using a game controller simulating a guitar;
FIG. 4 is a screen shot depicting a screen display in which a player affects gameplay using a guitar controller having a whammy bar;
FIG. 5 is a screen shot depicting another screen display in which a player affects gameplay using a guitar controller having a whammy bar.

### Detailed Description

A controller simulating a musical instrument may be used with a variety of gaming platforms, such as: PLAYSTATION2, PLAYSTATION3, or PLAYSTATION PERSONAL, manufactured by Sony Corporation; DREAMCAST, manufactured by Sega Corp.; GAMECUBE, GAMEBOY, GAMEBOY ADVANCE, or WII, manufactured by
Nintendo Corp.; or XBOX or XBOX360, manufactured by Microsoft Corp. The simulated guitar musical controller may be used with a gaming platform comprising a personal computer, personal digital assistant, or cellular telephone.

Although described below in connection with a simulated guitar controller, the game controller may simulate any of a wide variety of musical instruments such as percussion instruments (including cymbals, bell lyre, celeste, chimes, crotales, glockenspiel, marimba, orchestra bells, steel drums, timpani, vibraphone, xylophone, bass drum, crash cymbal, gong, suspended cymbal, tam-tam, tenor drum, tom-tom, acme siren, bird whistle, boat whistle, finger cymbals, flex-atone, mouth organ, marching machine, police whistle, ratchet, rattle, sandpaper blocks, slapstick, sleigh bells, tambourine, temple blocks, thunder machine, train whistle, triangle, vibra-slap, wind machine, wood block, agogo bells, bongo drum, cabaca, castanets, claves, conga, cowbell, maracas, scraper, timbales, kick drum, hi-hat, ride cymbal, sizzle cymbal, snare drum, and splash cymbal), wind instruments (including piccolo, alto flute, bass flute, contra-alto flute, contrabass flute, subcontrabass flute, double contrabass flute, piccolo clarinet, sopranino clarinet, soprano clarinet, basset horn, alto clarinet, bass clarinet, contra-alto clarinet, contrabass clarinet, octocontra-alto clarinet, octocontrabass clarinet, saxonette, soprillo, sopranino saxophone, soprano saxophone, conn-o-sax, clar-o-sax, saxie, mezzo-soprano saxophone, alto saxophone, tenor saxophone, baritone saxophone, bass saxophone, contrabass saxophone, subcontrabass saxophone, tubax, aulochrome, tarogato, folgerphone, contrabassoon, tenoroon, piccolo oboe, oboe d'amore, English horn, French horn, oboe de caccia, bass oboe, baritone oboe, contrabass oboe, bagpipes, bugle, cornet, didgeridoo, euphonium, flugelhorn, shofar, sousaphone trombone, trumpet, tuba, accordion, concertina, harmonica, harmonium, pipe organ, voice, bullroarer, lasso d'amore, whip and siren), other stringed instruments (including harps, dulcimer, archlute, arpeggione, banjo, cello, Chapman stick, cittern, clavichord, double bass, fiddle, slide guitar, steel guitar, harpsichord hurdy gurdy, kora, koto, lute, lyre, mandola, mandolin, sitar, ukulele, viola, violin, and zither) and keyboard instruments (including accordion, bandoneon, calliope, carillon, celesta, clavichord, glasschord, harpsichord, electronic
organ, Hammond organ, pipe organ, MIDI keyboard, baby grand piano, electric piano, grand piano, janko piano, toy piano, upright piano, viola organista, and spinets).

Game controllers simulating any of the instruments above may provide a note-producing mechanism different from that usually associated with the simulated instrument. For example, a simulated keyboard controller may include, in addition to key as one would expect on a keyboard, a pitch bend wheel or an associated effects pedal as a secondary note-producing mechanism. Simulated woodwind instruments may include "mutes," such as cup mutes, straight mutes, wah-wah mutes, plunger mutes, bucket mutes, or hat mutes. A simulated microphone may include an effects pedal as a secondary note producing mechanism.

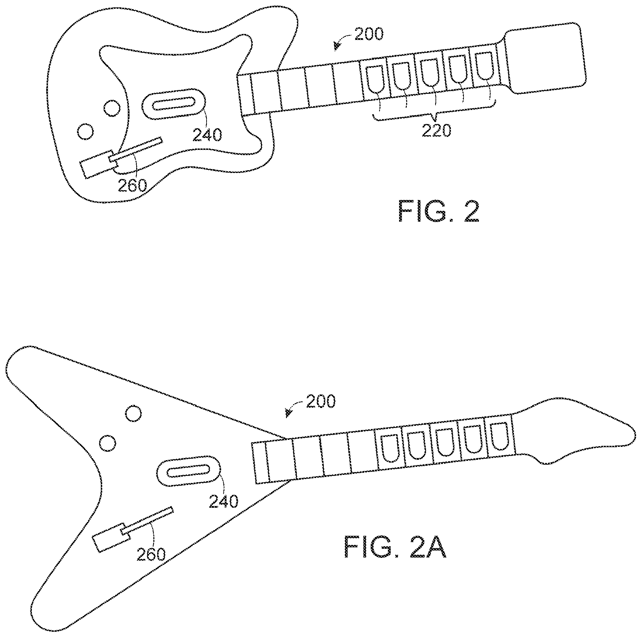

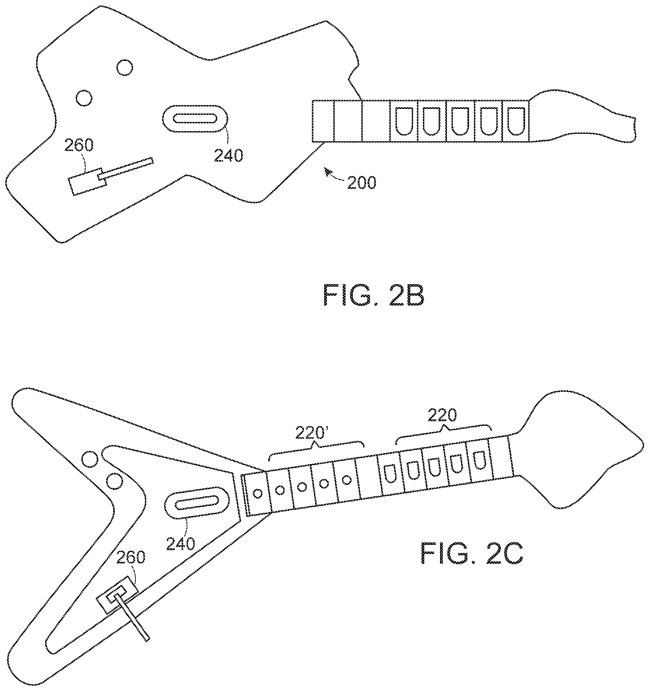

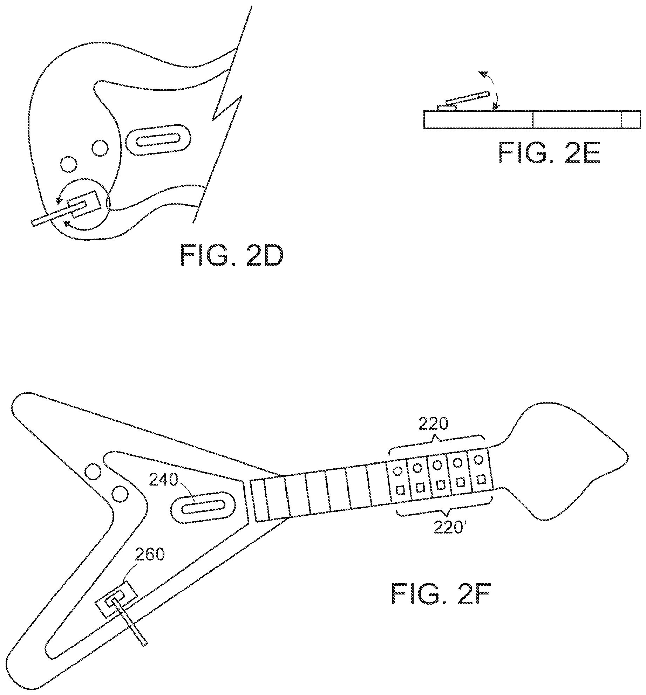

Referring now to FIG. 2, an embodiment of a simulated guitar controller 200 for use with a video game is shown. The simulated guitar controller 200 is provided with fret buttons 220 Although five fret buttons are shown in FIG. 2, any number of fret buttons 220 may be provided by the controller 200. The simulated guitar controller also includes a "strum bar" 240. In order to successfully "play" a game event, the player holds down one or more of the fret buttons 220 while simultaneously strumming the strum bar 240, in much the same way that one would play a guitar. In some embodiments players may also execute "hammer ons" and "pull offs," as described below, which allow a player to "play" a game event by pressing or releasing only a fret button 220.

FIGs. 2A and 2B depict alternate embodiments of the guitar controller of FIG. 2. FIG. 2A depicts an embodiment of the guitar controller intended to simulate a guitar model by Gibson known as the "Flying V." FIG. 2B depicts an embodiment of the guitar controller intended to simulate a guitar model known as the "Moderne." Any other body styling may be provided. For example, in some embodiments, the body portion of the guitar controller simulates a Gibson Blueshawk, Gibson Byrdland, Gibson Chet Atkins SST, Gibson Citation, Gibson Corvus, Gibson Digital, Gibson ES-120, Gibson ES-125, Gibson ES-135, Gibson ES-137, Gibson ES-150, Gibson ES-165, Gibson ES-175, Gibson ES-225, Gibson ES-295, Gibson ES-330, Gibson ES-335, Gibson ES-335 "Lucille", Gibson ES-345, Gibson ES-347, Gibson ES-355, Gibson EDS-1275, Gibson Explorer (also known as the X-plorer), Gibson Firebird, Gibson Futura, Gibson Howard Roberts Fusion, Gibson Invader, Gibson L4-CES, Gibson L5, Gibson L5S, Gibson L6-S, Gibson Les Paul, Gibson Les Paul Black Beauty, Gibson Les Paul Custom Anniversary 25/50, Gibson Les Paul Junior, Gibson Les Paul Studio, Gibson Les Paul Swamp Ash Studio, Gibson Les Paul Recording, Gibson Les Paul 23, Gibson Les Paul 432, Gibson (Les Paul) "The Paul" Deluxe (which has a cutaway SG body), Gibson (Les Paul) "The Paul" Deluxe Firebrand (which is characterized in having a cutaway SG body with firebranded Gibson logo), Gibson Marauder, Gibson Melody Maker, Gibson Nighthawk, Gibson RD, Gibson S-1, Gibson SG, Gibson SG Special, Gibson SG Supreme, Gibson Sonex, Gibson Super 400, Gibson MIII, , Gibson Advanced Jumbo, Gibson Blues King, Gibson B12-45 12 string, Gibson C-165 Maple, Gibson C-165 Rosewood, Gibson Hummingbird, Gibson Hummingbird Custom, Gibson Dove, Gibson Dove Artist Model, Gibson Doves In Flight Custom, Gibson J-160 E VS Std, Gibson J-180, Gibson J-185, Gibson J-185 EC, Gibson J-185 EC Rosewood, Gibson J-185 EC Cutaway, Gibson J-90 Super Fusion, Gibson J-45, Gibson J-45 Deluxe, Gibson J-45 Rosewood, Gibson J-45 Custom Vine, Gibson J-50, Gibson L-00, Gibson L-130, Gibson L-140, Gibson L-150 Custom, Gibson LC-1 Cascade, Gibson LC-2 Sonoma, Gibson J-100, Gibson Nick Lucas Reissue, Gibson Nick Lucas Elite, Gibson J-150 Maple, Gibson J-200, Gibson J-200 EC, Gibson SJ-200 Western Classic, Gibson J-200 Custom Vine, Gibson J-250 Monarch, Gibson J-2000, Gibson Super 200 Cutaway Custom, Gibson SJ-300 Rosewood, Gibson Sheryl Crow Signature Model, Gibson Songwriter Deluxe, Gibson Songwriter Deluxe Cutaway, Gibson Songrwriter Deluxe 12 String, Gibson Southern Jumbo, Gibson Traveling Songwriter, Fender Broadcaster, Fender Bullet, Fender Cyclone, Fender Duo-Sonic, Fender Electric XII, Fender Jaguar, Fender Jag-stang, Fender Jazzmaster, Fender Katana, Fender Contemporary Stratocaster Japan, Fender Lead Series, Fender LTD, Fender Musicmaster, Fender Mustang, Fender Prodigy, Fender Performer, Fender Showmaster, Fender Starcaster, Fender Stratocaster, Stratocaster XII, Fat Strat, Fender Telecaster, Fender Telecaster Custom, Fender Telecaster Deluxe, J5 Telecaster Squire, Fender Toronado, Fender Swinger, Fender Bronco, or Fender Custom.

The body portion of the guitar may simulate bass guitars, such as the Gibson EB-0, Gibson EB-1, Gibson EB-2, Gibson EB-3, Gibson EB-6, Gibson RD bass, Gibson Thunderbird, Gibson Ripper, Gibson Grabber, Gibson G3, Gibson Victory Standard bass, Gibson Les Paul bass, Fender Jazz Bass, Fender Jaguar Bass, Fender Mustang Bass, Fender Precision Bass, Fender Performer Bass, Fender Telecaster Bass, Fender VI, Fender Zone Bass, Lender Dimension Bass, Fender Bass V, Fender Bronco Bass, or Fender Bullet Bass.

FIG. 2C depicts another guitar controller having two sets of fret buttons 220, 220' . As shown in FIG. 2C a second set of fret buttons 220' is disposed on the "neck" of the guitar proximal to the guitar body, i.e. in between the first set of fret buttons 220 and the guitar body. The ordering of the second set of fret buttons 220' is the same as the first set of fret buttons 220; that is, if the first set of fret buttons 220 are colored, beginning at the "head" of the guitar neck and moving toward the body, green, red, yellow, blue, orange, then the second set of fret buttons 220' have the same coloring as one continues down the neck toward the guitar body.

The fret buttons 220 and 220' may be colored to indicate that the buttons correspond to a particular note, chord, or fret. A fret button 220 may indicate color by the color of the entire fret button. Only a portion of the fret button may be colored. For example, a fret button may be mostly black, but contain a colored dot or stripe indicating color. Or for example, the fret button may be clear, and one or more lights underneath the fret button may indicate the color.

Other markings on the neck may indicate the "color" of a particular fret button. For example, colored dots may be placed on the neck of the guitar next to one or more fret buttons 220 indicating the color corresponding to the fret button. In another example, patterns of dots may be used to indicate the note, chord, or fret to which a given button corresponds, similar to the patterns of dots used on traditional
guitars to designate frets by thirds and octaves. The fret buttons themselves may be white, clear, black, or all colored a similar color. Alternatively, one set of fret buttons 220 may be colored, while a second set of fret buttons is colorless. For example, in an embodiment such as the one shown in FIG. 2F, only one of the two fret buttons disposed on a given fret may be colored.

A user of a guitar controller may be able to change the colors corresponding to one or more fret buttons, such as by using stickers, removable button colors, multiple colored LED's under the fret buttons, or otherwise. A game using the guitar controller may then have a configuration tool such that the user can configure the game to recognize the altered colors.

Although shown in FIG. 2C as round buttons, fret buttons 220' may be any shape or size, including the same shape and size of the first set of fret buttons 220.

Referring ahead to FIG. 2F, the second set of fret buttons 220' may be positioned on the neck portion of the guitar controller such that respective ones of the first set of fret buttons and corresponding ones of the second set of fret buttons are positioned on the same fret of the neck (i.e. a red fret button of the first set of buttons 220 and a red fret button of the second set of fret buttons 220' are located near each other on the same "fret" of the neck portion of the guitar controller). In specific ones of these embodiments, fret buttons are physically connected to a toggle switch which allows a single physical button to provide two fret buttons, one associated with a first set of fret buttons and one provided with a second set of fret buttons. In further embodiments, respective ones of the first set of fret buttons 220 and corresponding ones of the second set of fret buttons 220' are electrically connected, e.g. wired together, so that activation of either one of the respective fret buttons is identified by the controller as activation of the fret button, regardless of whether the fret button from the first set of fret buttons 220, the fret button from the second set of fret buttons 220', or both, are activated. In still other embodiments, the respective ones of the fret buttons are not wired together, that is, the controller can distinguish between activation of fret buttons in one set versus activation of fret button in another set.

In some of these latter embodiments, the second set of fret buttons 220' may be used for playing "solos" during gameplay. Use of the guitar controller in this manner provides a player with a more realistic gameplay experience, since guitar solos are often played very close to the body of the guitar. The second set of fret buttons 220 may be the only set of fret buttons on which hammer-ons and pull-offs may be executed, as described below. The second set of fret buttons 220' may be used to trigger specific guitar effects, such as pick slides, screeches, or feedback. Alternatively, "performing" using the second set of fret buttons may alter game graphics (such as venue animation, venue lighting, crowd animation, brightness, avatar animation, game cue sustain tail , game cue brightness, game cue sustain tail brightness, game cue size, game cue shape, game cue sustain tail pulsation, and game cue sustain tail size), sound quality, or other gameplay characteristics, such as character health, character wealth in the game, the player's score, or in-game "powerups."

Referring back to any one of FIGs. 2, 2A, 2B and 2C, the simulated guitar controller 200 also includes a vibrato bar 260, also known to guitar players as a tremolo bar or "whammy bar." The vibrato bar 260, for convenience, will be referred to throughout the remainder of this document as a "whammy bar" The whammy bar 260, as will be described below, may be used to alter the frequency, pitch, volume, sound quality, distortion, simulated feedback sound, or any other attribute of the current note or chord being played by the player.

The whammy bar 260 of the controller resembles a whammy bar of a real guitar. As shown in FIG. 2D, and with comparison to FIG. 2B, the whammy bar 260 can be rotated to any one of a number of positions for the convenience of the player. As shown in FIG. 2D, the whammy bar 260 has been rotated to a position that places it out of the way of the player's strumming hand. In some embodiments, the whammy bar 260 is spring-loaded, like the whammy bar of a real guitar. In these embodiments, as depicted by FIG. 2E, the whammy bar 260 can be pushed down or pulled up to affect the played note. When released, it settles back to its default, neutral position.

The whammy bar is typically manipulated by the guitarist's strumming hand, that is, the hand with which the player operates the strum bar 240. In a real guitar, manipulating the whammy bar directly affects the tension of the guitar strings, and therefore causes the pitch of the vibrating strings to rise and fall as the bar is pulled or pushed. The simulated whammy bar of the guitar controller, the vibrato bar, can be used as a continuous controlling actuator, much like a joystick. Typically, the vibrato bar has a single degree-of-freedom, but it may have more degrees of freedom. It may additionally be used as an on-off switch, instead of a continuous controller. The whammy bar 260 of the controller looks and feels like the whammy bar of a real guitar, and, therefore provides a much more enjoyable gaming experience for the player.

The guitar controller 200 also allows a player to use more sophisticated guitar playing techniques to interact with a game. Two such techniques are "hammer ons" and "pull offs." Hammer-ons and pull-offs allow a guitarist to player notes in rapid succession. Typically, they only require the use of the player's fretting hand. To play a hammer-on note, the guitarist uses one of the free fingers of his fretting hand to strike the guitar string with high velocity. This results in the string vibrating due to the force of the string hitting a fret. As a result, the string need not be strummed by the strumming hand. Pull offs require the guitarist to tug slightly on the string when he releases it from a fret. This pulling action also causes the string to vibrate more, again, eliminating the need to strum the string with the strumming hand.

In the simulated guitar controller 200, hammer-ons may be simulated by allowing the player to press down fret buttons 220 without needing to simultaneously strum the strum bar 240. This is achieved by the manufacturer of the game authoring the game content to identify a note as amenable to hammering on or pulling off. For a hammer on, a player will generally need to capture a "lower" pitched note traditionally, that is, by holding down a fret button and simultaneously activating the strum bar. If the next note is identified as amenable to being played by a hammer technique, the player need only activates the "higher" pitched fret button to successfully capture the note.

Similarly, in pull-offs, the player can "play a note" by releasing a fret button 220 without needing to simultaneously strum the strum bar 240. This is achieved, again, by the manufacturer of the game authoring the game content to identify a note as amenable to hammering on or pulling off. For a pull off, a player will generally need to capture a pair of notes traditionally, that is, by holding down both fret buttons and simultaneously activating the strum bar. If the next note is identified as amenable to being played by a pull off technique, the player need only release the "higher" pitched fret button to successfully capture the note. As discussed above, when using the embodiment of a guitar controller 200 depicted in FIG. 2E, the second set of fret buttons may be used to perform hammer-ons and pull-offs. In either of these embodiments, notes that may be played using a hammer-on or pull-off technique may be visually indicated to the player by, for example, changing their geometric shape, transparency, color, or brightness.

Real guitarists often perform flamboyant motions on stage when playing guitar as part of their showmanship. One typical motion involves rotating the guitar vertically so that the neck of the guitar points up, while the body of the guitar is down, usually at waist level. In the simulated guitar controller 200, a mechanical "tilt sensor" can be included that monitors the guitar's physical orientation. This tilt sensor is typically a mercury switch or a ball-bearing switch which acts as a binary actuator, indicating whether the guitar has been rotated into a "neck up" position, or is in the normal playing position. Such tilt sensors have been included in guitar controllers manufactured by Konami and by Red Octane. Other secondary techniques for interacting with the controller include shaking the controller and slapping the controller.

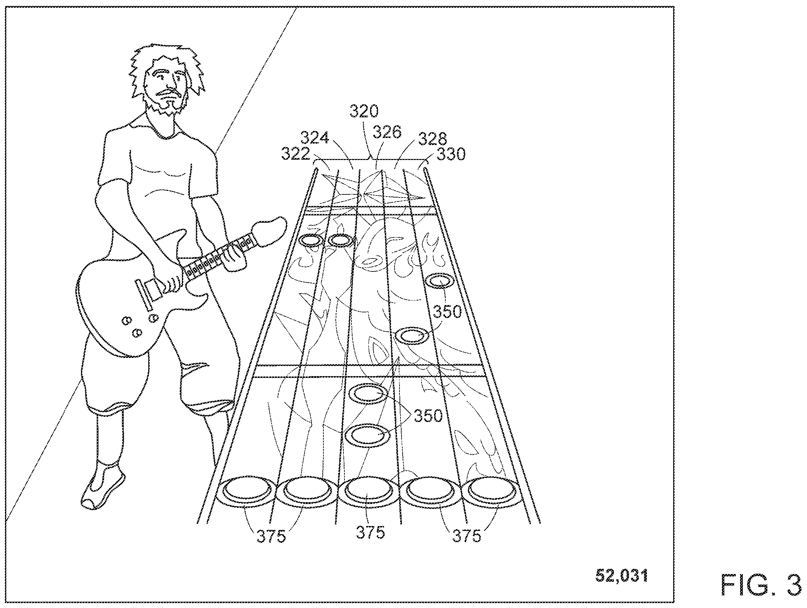

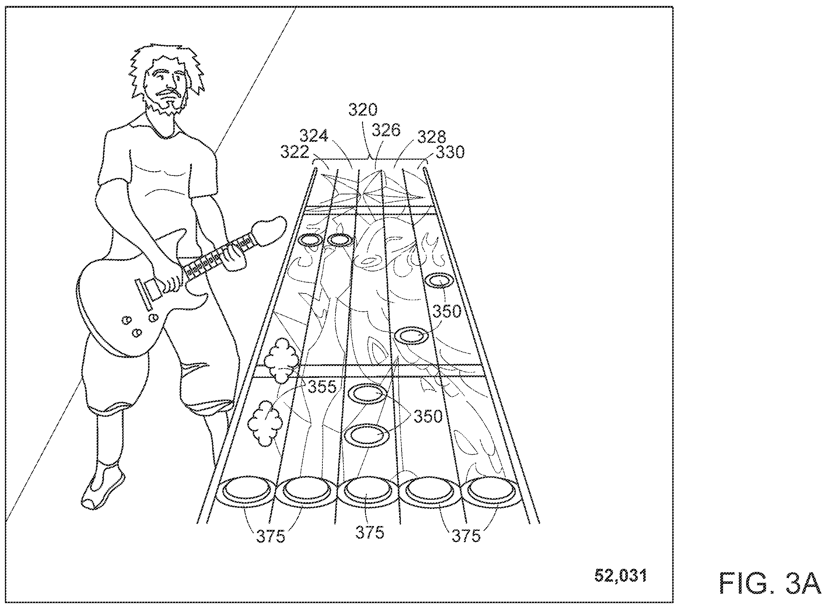

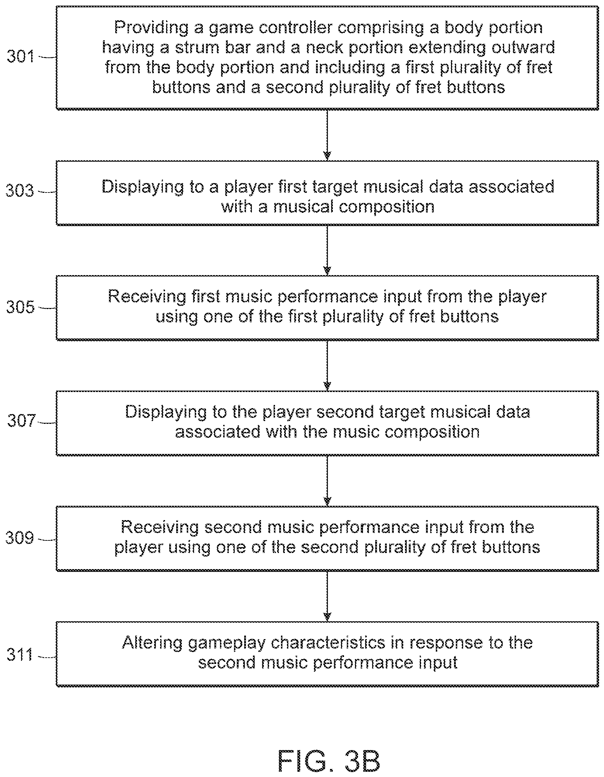

Referring now to FIG. 3, one embodiment of a screen shot depicting a rhythm action game in which the simulated musical instrument, such as a simulated guitar controller, can be used is shown. A lane 320 extends to the players. In the embodiment shown in FIG. 3, the lane has five sub lanes 322, 324, 326, 328, 330 which correspond to a respective one of the fret buttons 220 provided on the guitar controller 200. In other embodiments, the number of sublanes does not need to match the number of fret buttons 220 provided by the simulated guitar controller 200. For embodiments in which there are more fret buttons 220 provided than sublanes, a subset of the provided fret buttons 220 may be used to interact with the game. For those embodiments in which there are more sublanes than fret buttons 220, one fret button 220 may be assigned to more than one sub lane.

As shown in FIG. 3, each lane may be subdivided into a plurality of segments. Each segment may correspond to some unit of musical time, such as a beat, a plurality of beats, a measure, or a plurality of measures. Although the embodiment shown in FIG. 3 show equally-sized segments, each segment may have a different length depending on the particular musical data to be displayed. In addition to musical data, each segment may be textured or colored to enhance the interactivity of the display.

Referring back to FIG. 3, a sublane may have one or more game "cues", "elements" or "gems" 350 corresponding to musical events distributed along the sublanes. During gameplay, the cues 350 appear to flow toward a game player. The cues 350 are distributed on the sublanes in a manner having some relationship to musical content associated with the game level. For example, the cues may represent note information (gems spaced more closely together for shorter notes and further apart for longer notes, pitch (gems placed on the left side of the lane for notes having lower pitch and the right side of the lane for higher pitch), volume (gems may glow more brightly for louder tones), duration (gems may be "stretched" to represent that a note or tone is sustained), articulation, timbre or any other time-varying aspects of the musical content. Although shown in FIG. 3 as a circular element, the game elements 350 may be any geometric shape, and may have other visual characteristics, such as transparency, color, or variable brightness.

As the game elements 350 move along a respective sublane, musical data represented by the game elements 350 may be substantially simultaneously played as audible music when the player successfully performs the event. To successfully perform an event, a player holds down the fret button 220 corresponding to the sublane on which the game element 350 appears while strumming the strum bar 240. The player must perform this action when the game element 350 passes under the target marker 375. The player may hold down the corresponding fret button at any point in time before the moment when game element 350 passed under the target marker 375. In other embodiments, the player may successfully perform an event by performing a hammer on or pull off when the game element 350 passes under the target marker 375.

In some embodiments, audible music represented by a game element 350 is only played (or only played at full or original fidelity) if a player successfully "performs the musical content" by capturing or properly executing the game element 350. In other embodiments, the audible music represented by a game element 350 is modified, distorted, or otherwise manipulated in response to the player's proficiency in executing game elements associated with a sublane. For example, various digital filters can operate on the audible music prior to being played by the game player. Various parameters of the filters can be dynamically and automatically modified in response the player capturing game elements associated with sublane, allowing the audible music to be degraded if the player performs poorly or enhancing the audible music if the player performs well. For example, if a player fails to execute a game event, the audible music represented by the failed event may be muted, played at less than full volume, or filtered to alter the its sound. In certain embodiments, a "wrong note" sound may be substituted for the music represented by the failed event. Conversely, if a player successfully executes a game event, the audible music may be played normally. In some embodiments, if the player successfully executes several, successive game events, the audible music associated with those events may be enhanced, for example, by adding an echo or "reverb" to the audible music. The filters can be implemented as analog or digital filters in hardware, software, or any combination thereof. Further, application of the filter to the audible music output, which in many embodiments corresponds to musical events represented by game elements 350, can be done dynamically, that is, during play. Alternatively, the musical content may be processed before game play begins. In these embodiments, one or more files representing modified audible output may be created and musical events to output may be selected from an appropriate file responsive to the player's performance.

FIG. 3A depicts a screenshot of a rhythm-action game in which a second set of fret buttons is part of gameplay. As shown in FIG. 3A and similar to FIG. 3, cues 350 appear to flow toward a game player. Unlike the embodiment depicted in FIG. 3, a second set of cues 355 are also distributed on the sublanes. The second set of game cues 355 indicate to the player that the second set of fret buttons 220' should be used when performing those game events. Failure to perform those game events on the second set of fret buttons 220' may result in failure. Successfully performing the game events indicated by the second set of game cues 355 may alter game graphics (such as venue animation, venue lighting, crowd animation, brightness, avatar animation, game cue sustain tail , game cue brightness, game cue sustain tail brightness, game cue size, game cue shape, game cue sustain tail pulsation, and game cue sustain tail size), sound quality, or other gameplay characteristics, such as character health, character wealth in the game, the player's score, or in-game "powerups." Although the difference between game cues 350 and 355 is shown in FIG. 3 as geometric shape, the difference may be indicated using any visual characteristics, such as transparency, color, or brightness.

Referring now to FIG. 3B, a flow diagram illustrating a method for facilitating interaction of a player with a music-based video game using a game controller simulating a guitar is shown. In brief overview, the method comprises: providing a game controller comprising a body portion having a strum bar and a neck portion extending outwardly from the body portion and including a first plurality of fret buttons and a second plurality of fret buttons (step 301); displaying to a player first target musical data associated with a musical composition (step 303); receiving first music performance input from the player using one of the first plurality of fret buttons (step 305); displaying to the player second target musical data associated with the musical composition (step 307); receiving second music performance input from the player using one of the second plurality of fret buttons (step 309); and altering a gameplay characteristic in response to the received second music performance input (step 311).

Still referring to FIG. 3B, now in greater detail, the method shown comprises: providing a game controller comprising a body portion having a strum bar and a neck portion extending outwardly from the body portion and including a first plurality of fret buttons and a second plurality of fret buttons (step 301). The game controller may comprise a simulated guitar such as the one in FIG. 2C.

The method shown comprises displaying to a player first target musical data associated with a musical composition (step 303). This target musical data may comprise cues, elements, or gems as discussed herein. The first target musical data may indicate to the player that the player should use the first plurality of fret buttons 220 when playing the notes corresponding to the target musical data. For example, the first target musical data may correspond to a chorus or verse of a song which is meant to be played on the fret buttons 220 furthest from the body of the guitar. The method shown then comprises receiving first music performance input from the player using one of the first plurality of fret buttons (step 305).

The method shown comprises displaying to the player second target musical data associated with the musical composition (step 307). This target musical data may comprise cues, elements, or gems as discussed herein. The second target musical data may indicate to the player that the player should use the second plurality of fret buttons 220 when playing the notes corresponding to the target musical data. The second target musical data may differ from the first target musical data in shape, size color, transparency, and/or any other graphical property. For example, the second target musical data may correspond to a solo within a song that is meant to be played on the fret buttons 220' close to the body of the guitar. The method then comprises receiving second music performance input from the player using one of the second plurality of fret buttons (step 309).

The method comprises altering gameplay characteristics in response to the second music performance input (step 311). Examples of gameplay characteristics which may be altered include score bonus, star power, player score, character health, character money, in-game power-ups, and crowd excitement. For example, a player successfully playing a portion of a solo on the fret buttons 220' close to the body of the guitar may result in increased crowd response, and an increased score. The method comprises altering graphical characteristics of the game in response to the second musical performance input. Examples of graphical characteristics which may be altered include venue lighting, venue brightness, venue animation, crowd animation, crowd excitement, brightness, avatar animation, sustain tail, note brightness, sustain tail brightness, note size, note shape, sustain tail pulsation, and sustain tail size. For example, if a player successfully plays one or more notes using the fret buttons 220' close to the body of the guitar, the notes may change color to indicate the success, and the crowd animations may be changed such that the crowd appears more enthusiastic about the performance.

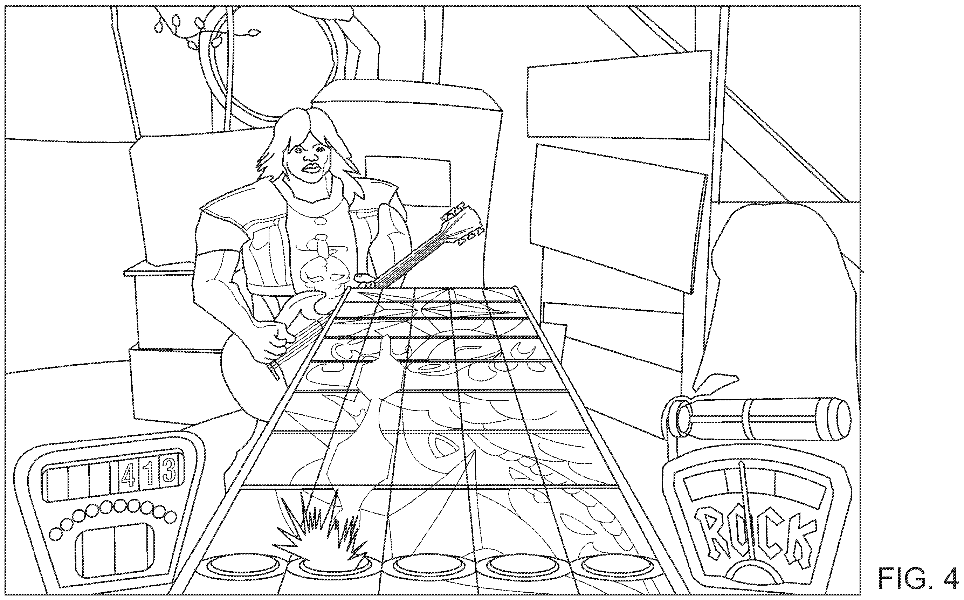

Referring now to FIG. 4, a screen display showing player interaction using the whammy bar is shown. As described above, successfully activating the correct fret button 220 and strum bar 240 results in performance of a musical event. By activating the whammy bar, the player can alter the certain aspects of the reproduced musical event. For example, pushing or pulling on the whammy bar can change the pitch of a note or chord, the volume of a note or chord, or the sound quality of a note or chord. Activation of the whammy bar may also add effects to the audio such as simulated feedback, flange, fuzz, vocoder, echo, reverb, chorus, and delay. Pushing or pulling the whammy bar can add a feedback audio effect to a note or chord, while pushing or pulling the whammy bar can add a distortion audio effect to the note or chord being held. In addition, the whammy bar can affect sustained notes in addition to short single gems.

As shown in FIG. 4, pushing or pulling the whammy bar 260 may affect the graphical elements of the game. In FIG. 4, use of the whammy bar alters a note's "sustain trail," a visual cue that helps a player know for how long a fret button should be depressed. As shown in FIG. 4, the player is using the whammy bar to alternately increase and decrease the width of the sustain trail. Others visuals can be directly
affected by the whammy bar. The graphical display of the note may widen or narrow, it may brighten or dim, pulses can be animated down the length of the note, and its overall size may grow or shrink. Any number of graphical effects may alter the note to inform the player that the whammy bar is being actively used. The player might be required by the game to move the whammy bar synchronously with a pitch bend in the recorded music. The player's moving of the whammy bar does not affect the sound, but the player's ability to bend the whammy bar as directed by the game affects the player's game score.

Use of the whammy bar may alter both the visual and auditory aspects of the game. For example, referring to FIG. 4, use of the whammy bar may cause the pitch of the sustained note to increase and decrease while the displayed sustain trail is widened and narrowed. Use of the whammy bar distorts a sustained note and causes a player's avatar to execute a flamboyant move, such as a jump, striking a pose with the guitar, or "machine gunning" the crowd with the guitar.

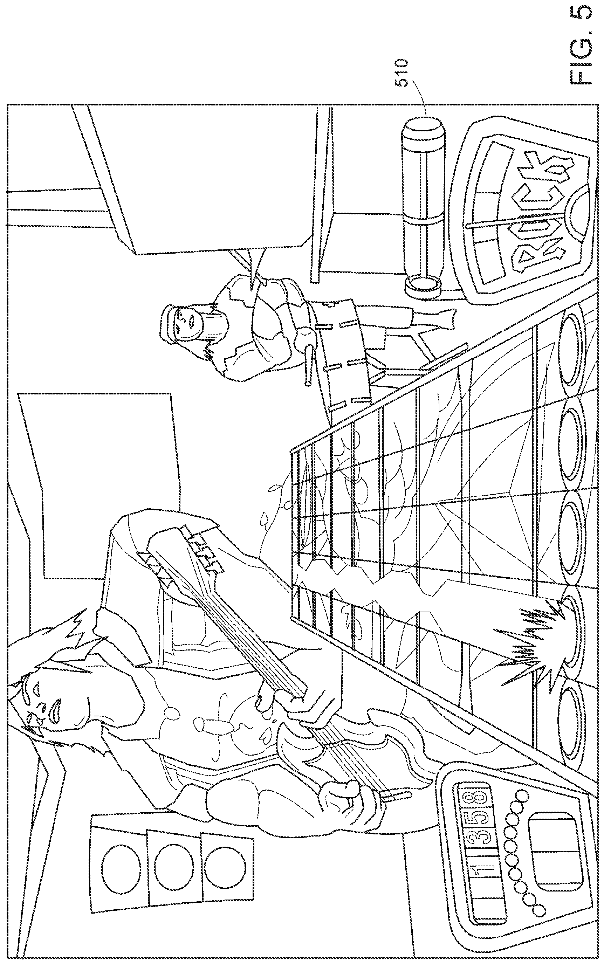

FIG. 5 depicts a screen display showing how use of the whammy bar may be used as a gameplay mechanic. In the screenshot shown if FIG. 5, the player is using the whammy bar to alter the pitch of a performed note. As shown in FIG. 5, the altered note is a special note indicating that the player will receive a bonus for successfully performing the note. By altering the note's pitch using the whammy bar, the player builds up the bonus more quickly. In one specific embodiment, the bonus is referred to as "star power collection" and is graphically indicated by the "star meter" 510.

Manipulating the whammy bar can affect other aspects of gameplay, such as the excitement of the simulated crowd, the number of points the player receives, the amount of "health" a player has, or, in general, the amount of any arbitrary game resource, such as points, score, health, money.

The controller 200 may be used in conjunction with effects pedals that allow a player to activate certain audio effects. For example, a controller 200 may be provided with a socket for receiving input indicating activation of a flange pedal, fuzzbox, vocoder, distortion pedal, echo pedal, reverb pedal, chorus pedal, delay pedal, pedals that affect the attack and decay of a reproduced note and any other pedal typically used with real guitars.

The tilt sensor of controller 200 may be used as part of a gameplay mechanic. Tilting the guitar vertically causes "star power deployment" and is indicated by scoring, graphical, and sonic changes in the game. For example, tilting the guitar vertically changes the excitement of the simulated crowd, the number of points a player receives, the rate at which a player accumulates points, the overall reverberation of the music, the sound quality of the guitar notes, and other graphical and audio effects.

Although described in the context of a rhythm action game, the simulated guitar controller 200 may be used with any genre of game, including first-person shooter, survival horror, action adventure, fighting games, role playing games, real-time strategy games, platformers, puzzle games, racing games, sports games, and stealth action games, third-person shooters. The simulated guitar controller 200 may also be used with rhythm action games that do not center on performance of a musical work using an instrument, such as Dance Dance Revolution of Karaoke Revolution, both published by Konami.

Having described certain embodiments of the invention, it will now become apparent to one of skill in the art that other embodiments incorporating the concepts of the invention may be used. Although the described embodiments relate to the field of rhythm-action games, the principles of the invention can extend to other areas that involve musical collaboration or competition by two or more users connected to a network.

## Claims

1. A method for facilitating interaction of a player with a music-based video game using a game controller (200) simulating a musical instrument and having a first input device simulating that of an instrument the controller (200) simulates, the method comprising:
a. displaying (303) to a player target musical data associated with a musical composition;
b. receiving (305) first music performance input from the player via a first input device of a game controller (200);
c. reproducing a portion of the musical composition in response to the received first music performance input;
d. receiving (309) second music performance input from the player via a second input device different from the first input device of the game controller (200), the second music performance input unassociated with target musical data and the second music performance input comprising one of: activation of an effect pedal, activation of a pitch bend wheel, activation of a mute, or activation of a vocoder; and
e. applying digital audio processing to the portion of the musical composition being reproduced in response to the received second music performance input.

2. The method of claim 1, wherein step (a) comprises a step from the group: -
(i) displaying to a first player target musical data associated with a musical composition, the target musical data disposed along a musical time axis that does not lie in the image plane of a display associated with the first player;
(ii) displaying to a first player target musical data associated with the guitar track of a musical composition;
(iii) displaying to a first player target musical data associated with the percussion track of a musical composition;
(iv) displaying to a first player target musical data associated with the bass track of a musical composition;
(v) displaying to a first player target musical data associated with the keyboard track of a musical composition; or
wherein step (d) comprises a step from the group:
(i) receiving second music performance input from the player, the second performance input comprising shaking the game controller (200);
(ii) receiving second music performance input from the player, the second performance input comprising slapping the game controller (200);
(iii) receiving second music performance input from the player, the second performance input comprising tilting the game controller (200);
(iv) receiving second music performance input from the player, the second performance input comprising manipulation of a vibrato bar (260) disposed on a body portion of the game controller;
(v) receiving second music performance input from the player, the second performance input comprising pushing the vibrato bar (260) disposed on the body portion;
(vi) receiving second music performance input from the player, the second performance input comprising pulling the vibrato bar (260) disposed on the body portion.

3. The method of claim 1, wherein step (e) comprises altering sound quality of the reproduced portion of the musical composition in response to the second musical performance input.

4. The method of claim 3, wherein the altered sound quality is selected from the group consisting of frequency, pitch, distortion, simulated feedback, flange, fuzz, vocoder, echo, reverb, chorus, delay and volume.

5. The method of claim 1 wherein step (e) comprises altering gameplay characteristics in response to the second musical performance input.

6. The method of claim 5, wherein the altered gameplay characteristic is selected from the group consisting of score bonus, star power, player score, character health, character money, in-game power-ups, and crowd excitement.

7. The method of claim 1, wherein step (e) comprises altering graphical characteristics of the game in response to the second musical performance input.

8. The method of claim 7, wherein the graphical characteristic to be altered is selected from the group consisting of venue lighting, venue brightness, venue animation, crowd animation, crowd excitement, brightness, avatar animation, sustain tail, note brightness, sustain tail brightness, note size, note shape, sustain tail pulsation, sustain tail size and sustain tail brightness.

9. A game controller (200) simulating a musical instrument in a video game, the controller (200) comprising:
a first input device simulating an input device of the musical instrument the controller simulates for providing first music performance input associated with target musical data displayed to the player; and
a secondary input device for providing second music performance input unassociated with target musical data displayed to the player.

10. The game controller of claim 9, wherein the game controller (200) is in the form of a simulated guitar.

## Patentansprüche

1. Verfahren zum Erleichtern einer Interaktion eines Spielers mit einem musikbasierten Videospiel unter Verwendung eines Gamecontrollers (200), der ein Musikinstrument simuliert und eine erste Eingabevorrichtung aufweist, die ein Instrument simuliert, das der Controller (200) simuliert, wobei das Verfahren umfasst:
a. Anzeigen (303) von Zielmusikdaten, die einer musikalischen Komposition zugeordnet sind, an einen Spieler;
b. Empfangen (305) einer ersten Musikperformance-Eingabe vom Spieler über eine erste Eingabevorrichtung eines Gamecontrollers (200);
c. Reproduzieren eines Abschnitt der musikalischen Komposition in Ansprechen auf die empfangene erste Musikperformance-Eingabe;
d. Empfangen (309) einer zweiten Musikperformance-Eingabe vom Spieler über eine von der ersten Eingabevorrichtung verschiedene zweite Eingabevorrichtung des Gamecontrollers (200), wobei die zweite Musikperformance-Eingabe nicht den Zielmusikdaten zugeordnet sind und die zweite Musikperformance-Eingabe eines von Folgendem umfasst: Aktivierung eines Effektpedals, Aktivierung eines Pitch-Benders, Aktivierung eines Dämpfers oder Aktivierung eines Vocoders; und
e. Anwenden einer digitalen Audioverarbeitung an dem Abschnitt der musikalischen Komposition, die reproduziert wird, in Ansprechen auf die empfangene zweite Musikperformance-Eingabe.

2. Verfahren nach Anspruch 1, wobei Schritt (a) einen Schritt aus der Gruppe umfasst:
(i) Anzeigen von Zielmusikdaten, die einer musikalischen Komposition zugeordnet sind, an einen ersten Spieler, wobei die Zielmusikdaten entlang einer musikalischen Zeitachse angeordnet sind, die nicht in der Bildebene einer dem ersten Spieler zugeordneten Anzeige liegt;
(ii) Anzeigen von Zielmusikdaten, die der Gitarrenspur einer musikalischen Komposition zugeordnet sind, an einen ersten Spieler;
(iii) Anzeigen von Zielmusikdaten, die der Percussionspur einer musikalischen Komposition zugeordnet sind, an einen ersten Spieler;
(iv) Anzeigen von Zielmusikdaten, die der Bassspur einer musikalischen Komposition zugeordnet sind, an einen ersten Spieler;
(v) Anzeigen von Zielmusikdaten, die der Keyboardspur einer musikalischen Komposition zugeordnet sind, an einen ersten Spieler; oder
wobei Schritt (d) einen Schritt aus der Gruppe umfasst:
(i) Empfangen einer zweiten Musikperformance-Eingabe vom Spieler, wobei die zweite Performance-Eingabe das Schütteln des Gamecontrollers (200) umfasst;
(ii) Empfangen einer zweiten Musikperformance-Eingabe vom Spieler, wobei die zweite Performance-Eingabe das Schlagen des Gamecontrollers (200) umfasst;
(iii) Empfangen einer zweiten Musikperformance-Eingabe vom Spieler, wobei der zweite Performance-Eingabe das Kippen des Gamecontrollers (200) umfasst;
(iv) Empfangen einer zweiten Musikperformance-Eingabe vom Spieler, wobei der zweite Performance-Eingabe die Manipulation eines Vibrato-Stabs (260) umfasst, der an einem Körperabschnitt des Gamecontrollers angeordnet ist;
(v) Empfangen einer zweiten Musikperformance-Eingabe vom Spieler, wobei der zweite Performance-Eingabe das Drücken des Vibrato-Stabs (260) umfasst, der am Körperabschnitt angeordnet ist;
(vi) Empfangen einer zweiten Musikperformance-Eingabe vom Spieler, wobei der zweite Performance-Eingabe das Ziehen des Vibrato-Stabs (260) umfasst, der am Körperabschnitt angeordnet ist.

3. Verfahren nach Anspruch 1, wobei Schritt (e) das Modifizieren der Klangqualität des reproduzierten Abschnitts der musikalischen Komposition in Ansprechen auf die zweite Musikperformance-Eingabe umfasst.

4. Verfahren nach Anspruch 3, wobei die modifizierte Klangqualität aus der Gruppe ausgewählt ist, die aus Frequenz, Tonhöhe, Verzerrung, simulierten Feedback, Spurkranz, Unschärfe, Vocoder, Echo, Hall, Refrain, Verzögerung und Volumen besteht.

5. Verfahren nach Anspruch 1, wobei Schritt (e) das Modifizieren von Spieleigenschaften in Ansprechen auf die zweite Musikperformance-Eingabe umfasst.

6. Verfahren nach Anspruch 5, wobei die modifizierten Spieleigenschaften aus der Gruppe ausgewählt sind, die aus Punktebonus, Sternchenleistung, Spielerpunkte, Figurenzustand, Figurengeld, Power-Ups im Spiel und Publikumsbegeisterung besteht.

7. Verfahren nach Anspruch 1, wobei Schritt (e) das Modifizieren von grafischen Eigenschaften des Spiels in Ansprechen auf die zweite Musikperformance-Eingabe umfasst.

8. Verfahren nach Anspruch 7, wobei die grafische Eigenschaft, die modifiziert werden soll, aus der Gruppe ausgewählt ist, die aus Veranstaltungsortbeleuchtung, Veranstaltungsorthelligkeit, Veranstaltungsortanimation, Publikumsanimation, Publikumsbegeisterung, Helligkeit, Avataranimation, Aufrechterhalten des Verfolgers, Mitteilungshelligkeit, Aufrechterhalten der Verfolgerhelligkeit, Mitteilungsgröße, Mitteilungsform, Aufrechterhalten einer Verfolgerpulsierung, Aufrechterhalten der Verfolgergröße und Aufrechterhalten der Verfolgerhelligkeit.

9. Gamecontroller (200), der ein Musikinstrument in einem Videospiel simuliert, wobei der Controller (200) umfasst:
eine erste Eingabevorrichtung, die eine Eingabevorrichtung des Musikinstruments simuliert, das der Controller simuliert, zum Bereitstellen einer erste Musikperformance-Eingabe, die den dem Spieler angezeigten Zielmusikdaten zugeordnet ist; und
eine zweite Eingabevorrichtung zum Bereitstellen einer zweiten Musikperformance-Eingabe, die den dem Spieler angezeigten Zielmusikdaten nicht zugeordnet ist.

10. Gamecontroller nach Anspruch 9, wobei der Gamecontroller (200) in der Gestalt einer simulierten Gitarre vorliegt.

## Revendications

1. Procédé pour faciliter une interaction d'un joueur avec un jeu vidéo à base de musique à l'aide d'un dispositif de commande de jeu (200) simulant un instrument de musique et ayant un premier dispositif d'entrée simulant celui d'un instrument que le dispositif de commande (200) simule, le procédé comprenant :
a. l'affichage (303), à un joueur, de données musicales cibles associées à une composition musicale ;
b. la réception (305) d'une première entrée de performance musicale en provenance du joueur via un premier dispositif d'entrée d'un dispositif de commande de jeu (200) ;
c. la reproduction d'une portion de la composition musicale en réponse à la première entrée de performance musicale reçue ;
d. la réception (309) d'une seconde entrée de performance musicale en provenance du joueur via un second dispositif d'entrée différent du premier dispositif d'entrée du dispositif de commande de jeu (200), la seconde entrée de performance musicale n'étant pas associée à des données musicales cibles et la seconde entrée de performance musicale comprenant l'une parmi : l'activation d'une pédale d'effets, l'activation d'une molette de modulation de hauteur, l'activation d'une sourdine, ou l'activation d'un vocodeur ; et
e. l'application d'un traitement audio numérique à la portion de la composition musicale reproduite en réponse à la seconde entrée de performance musicale reçue.

2. Procédé selon la revendication 1, dans lequel l'étape (a) comprend une étape du groupe :
(i) l'affichage, à un premier joueur, de données musicales cibles associées à une composition musicale, les données musicales cibles étant disposées selon un axe de temps musical qui ne se trouve pas dans le plan d'image d'un afficheur associé au premier joueur ;
(ii) l'affichage, à un premier joueur, de données musicales cibles associées à la piste de guitare d'une composition musicale ;
(iii) l'affichage, à un premier joueur, de données musicales cibles associées à la piste de percussion d'une composition musicale ;
(iv) l'affichage, à un premier joueur, de données musicales cibles associées à la piste de basse d'une composition musicale ;
(v) l'affichage, à un premier joueur, de données musicales cibles associées à la piste de clavier d'une composition musicale ; ou
dans lequel l'étape (d) comprend une étape du groupe :
(i) la réception d'une seconde entrée de performance musicale en provenance du joueur, la seconde entrée de performance comprenant le fait d'agiter le dispositif de commande de jeu (200) ;
(ii) la réception d'une seconde entrée de performance musicale en provenance du joueur, la seconde entrée de performance comprenant le fait de frapper le dispositif de commande de jeu (200) ;
(iii) la réception d'une seconde entrée de performance musicale en provenance du joueur, la seconde entrée de performance comprenant le fait d'incliner le dispositif de commande de jeu (200) ;
(iv) la réception d'une seconde entrée de performance musicale en provenance du joueur, la seconde entrée de performance comprenant la manipulation d'une tige vibrato (260) disposée sur une portion de corps du dispositif de commande de jeu ;
(v) la réception d'une seconde entrée de performance musicale en provenance du joueur, la seconde entrée de performance comprenant le fait de pousser sur la tige vibrato (260) disposée sur la portion de corps ;
(vi) la réception d'une seconde entrée de performance musicale en provenance du joueur, la seconde entrée de performance comprenant le fait de tirer sur la tige vibrato (260) disposée sur la portion de corps.

3. Procédé selon la revendication 1, dans lequel l'étape (e) comprend la modification d'une qualité de son de la portion reproduite de la composition musicale en réponse à la seconde entrée de performance musicale.

4. Procédé selon la revendication 3, dans lequel la qualité de son modifiée est sélectionnée à partir du groupe constitué par une fréquence, une hauteur, une distorsion, un retour simulé, un effet de flasque, un fuzz, un vocodeur, un écho, une réverbération, un chorus, un retard et un volume.

5. Procédé selon la revendication 1 dans lequel l'étape (e) comprend la modification de caractéristiques de jouabilité en réponse à la seconde entrée de performance musicale.

6. Procédé selon la revendication 5, dans lequel la caractéristique de jouabilité modifiée est sélectionnée à partir du groupe constitué par un bonus de résultat, un pouvoir de vedette, un point du joueur, la santé du personnage, l'argent du personnage, des mises sous tension intrajeu, et une excitation de la foule.

7. Procédé selon la revendication 1, dans lequel l'étape (e) comprend la modification de caractéristiques graphiques du jeu en réponse à la seconde entrée de performance musicale.

8. Procédé selon la revendication 7, dans lequel la caractéristique graphique à modifier est sélectionnée à partir du groupe constitué par un éclairage de lieu, une luminosité de lieu, une animation de lieu, une animation de la foule, une excitation de la foule, une luminosité, une animation de l'avatar, une fin de prolongation, une intensité de note, une intensité de fin de prolongation, une taille de note, une forme de note, une pulsation de fin de prolongation, une taille de fin de prolongation et une intensité de fin de prolongation.

9. Dispositif de commande de jeu (200) simulant un instrument de musique dans un jeu vidéo, le dispositif de commande (200) comprenant :
un premier dispositif d'entrée simulant un dispositif d'entrée de l'instrument de musique que le dispositif de commande simule pour fournir une première entrée de performance musicale associée à des données musicales cibles affichées au joueur ; et
un dispositif d'entrée secondaire pour fournir une seconde entrée de performance musicale non associée à des données musicales cibles affichées au joueur.

10. Dispositif de commande de jeu selon la revendication 9, dans lequel le dispositif de commande de jeu (200) est sous forme d'une guitare simulée.
